# EUROPÄISCHE PATENTSCHRIFT

(11) **EP 0 797 114 B1**
(45) Veröffentlichungstag und Bekanntmachung des Hinweises auf die Patenterteilung: **16.05.2001**
(21) Anmeldenummer: 97104705.5
(22) Anmeldetag: 19.03.1997
(51) Int. Cl.: G02B 6/46, H02G 15/113, G02B 6/00

(54) **Kabelmuffe**
Cable sleeve
Boîte de jonction

(30) Priorität: 20.03.1996 DE 19611020
(43) Veröffentlichungstag der Anmeldung: 24.09.1997
(73) Patentinhaber: RXS Gesellschaft für Vermögensverwaltung mbH, 80333 München (DE)
(72) Erfinder: Günther, Andreas, Dipl.-Ing., Fort Worth, Texas 76137 (US); Zimmer, Rainer, Dipl.-Ing., 58579 Schalksmühle (DE); Müller, Thorsten, Dipl.-Ing., 58708 Menden (DE)
(74) Vertreter: Viering, Hans-Martin, Dipl.-Ing.

(56) Entgegenhaltungen:
- EP-A- 0 543 350
- EP-A- 0 660 481
- GB-A- 2 209 410
- US-A- 5 495 549

## Beschreibung

Die Erfindung betrifft eine Kabelmuffe aus einer Unterschale und einem Deckel zur Aufnahme von elektrischen oder optischen Spleißen, wobei mindestens eine Stirnseite der Unterschale aus einem Festteil und einem herausnehmbaren Dichtungskörper besteht, wobei weiterhin in der Trennebene zwischen dem Festteil und dem Dichtungskörper Kabeleinführungsöffnungen angeordnet sind.

Aus der EP 0 579 019 - A1 ist eine Kabelmuffe zum Ablegen von Spleißkassetten für Lichtwellenleiter bekannt, wobei für jede Spleißkassette eine separate Aufnahme für Überlängen von Lichtwellenleiter-Adern vorgesehen ist. Die Spleißkassette und die Aufnahme hierfür sind jeweils auf einer Trägerplatte angeordnet und in einer Fixiervorrichtung gehalten. Jede Trägerplatte ist einzeln aus der Fixiervorrichtung entnehmbar, ohne daß dabei andere Trägerplatten aus ihrer Position genommen werden müssen. Die Unterschale dieser Kabelmuffe besteht an den Stirnseiten aus einem Festteil, auf das ein Dichtungskörper aufgesetzt werden kann, wobei die Kabeleinführungen zwischen dem Festteil und dem Dichtungskörper angeordnet sind.

Für vorliegende Erfindung stellt sich die Aufgabe, eine Kabelmuffe zu schaffen, die sowohl für die Aufnahme von elektrischen als auch von optischen Spleißen geeignet ist, wobei die Zugänglichkeit dieser Spleiße ermöglicht werden soll, ohne daß die Kabeleinführungsdichtungen beschädigt werden.

Bisher auf dem Markt befindliche Muffen sind entweder nur für Spleiße von Kupferkabeln oder für Lichtwellenleiter-Kabel ausgelegt und lassen sich meist nur aufwendig nachrüsten. Der Zugriff auf den Spleiß ist meistens umständlich und die Dichtungen in den Kabeleinführungen werden dabei zerstört. Der Vorteil der Kabelmuffe der vorliegenden Erfindung liegt im wesentlichen darin, daß diese Kabelmuffe sowohl für die Aufnahme von Kupferspleißen als auch von Lichtwellenleiter-Kabelspleißen mit den dazu gehörigen Besonderheiten, insbesondere der Unterbringung von Lichtwellenleiter-Überlängen, eingesetzt werden kann.

Die Kabelmuffe gemäß der Erfindung besteht im wesentlichen aus einer Unterschale, deren Stirnseiten jeweils aus einem fest angeformten Festteil und einem einsetzbaren Dichtungskörper gebildet werden, und einem Deckel, der einseitig mit mindestens einem Scharnier an der Unterschale klappbar angesetzt ist. Über Verschlußelemente auf der gegenüberliegenden Seite wird der Deckel nach dem Schließen mit Hilfe von Verschlußelementen dicht aufgepreßt. Die eingesetzten Dichtungskörper in den Stirnseiten sind dabei so fixiert, daß sie mit dem oberen Rand der Unterschale eine durchgehende Dichtungsebene bilden, in der Dichtungsmaterial beispielsweise in einer umlaufenden Nut eingelegt ist. Dieses Dichtungsmaterial kann aus elastischem oder plastischem Material bestehen und ermöglicht somit beliebiges Öffnen des Deckels, so daß ein schneller Zugriff auf den Spleißraum möglich ist, ohne daß die Dichtungen in den Einführungsöffnungen beeinträchtigt werden.

Die Unterschale der Kabelmuffe besteht vorzugsweise aus thermoplastischem Kunststoff, zum Beispiel aus Polypropylen. Entlang des einen Randes im Bereich der Trennungsebene zwischen der Unterschale und dem Deckel sind Scharnierelemente fest angeformt, die so gestaltet sind, daß korrespondierende Scharnierelemente entlang des einen Deckelrandes eingerastet werden können. Auf diese Weise ist möglich, daß der Deckel klappbar und gegebenenfalls abnehmbar an der Unterschale befestigt werden kann. Entlang der beiden gegenüber liegenden Ränder der Unterschale bzw. des Deckels sind Ansätze zum unverlierbaren Einsatz von Verschlußelementen angeordnet. Als Verschlußelemente dienen insbesondere Spannhaken aus verstärktem Kunststoff in Verbindung mit Drahtbügeln. Die Drahtbügel sind dabei unverlierbar mit den Spannhaken verbunden, die ebenfalls unverlierbar an den Ansätzen der Unterschale eingeschnappt werden. Diese Spannhaken passen sich in genau der äußeren Kontur der Kabelmuffe an und bilden damit einen fließenden Übergang in der Gehäuseform, so daß ein ungewolltes Öffnen durch überstehende Kanten, sowie das Öffnen von Hand verhindert bzw. erschwert wird. Zum Wiederöffnen der Muffe sind beispielsweise an den Spannhaken Schlitze vorgesehen, in die beispielsweise ein Schraubendreher eingesteckt werden kann. Dieser eingesetzte Schraubendreher dient als Hebel, mit dem die Spannhaken aus der Rasterung ausgehebelt werden können. Wie bereits beschrieben, ist das integrierte Scharnier zweigeteilt und kann durch Einrasten der beiden Hälften fest miteinander verbunden werden. Dabei ist das Scharnier so ausgeformt, daß bei einer bestimmten Schwenkposition die Hälften wieder getrennt werden können, so daß bei Bedarf der Deckel abgelegt werden kann. Durch entsprechende Ausbildung, zum Beispiel durch Verbreitern der äußeren Scharnierstege, ist eine versetzte Montage des Dekkels auf der Unterschale ausgeschlossen.

Der Deckel der Kabelmuffe besteht ebenfalls aus thermoplastischem Kunststoff, zum Beispiel aus Polypropylen. Auf der Verschlußseite befinden sich entlang des Randes Ansätze, z.B. als Vertiefungen, in die die Verschlußelemente eingesetzt werden, wobei die Verschlußelemente die Ränder der Vertiefungen hintergreifen. Diese hinterschnittenen Vertiefungen als Ansätze für die Verschlußelemente sind so gestaltet, daß sie formschlüssig die Muffe so verschließen, daß die Verschlußelemente nicht überstehen. Auf der Oberseite des Dekkels ist beispielsweise weiterhin ein Sackloch mit einem zu öffnenden Boden angeordnet, in welches nach dem Öffnen des Bodens beispielsweise ein Ventil eingesetzt werden kann. Es kann jedoch auch als Füllöffnung, beispielsweise zum Einfüllen von handelsüblichen Füllmassen genutzt werden. Außerdem sind im Innern Rippen angeformt, zwischen denen beispielsweise auch ein Begrenzungsstück eingesteckt werden kann, so daß hierdurch die Möglichkeit für die Erstellung eines Längswasserblockes (CORE-Block) zum Beispiel aus Gießharz gegeben ist. Weiterhin können an den Enden des Deckels und der Unterschale sich deckende Bohrungen zum Anbringen einer Plombe angeordnet werden.

Wie bereits beschrieben, besteht zumindest eine der Stirnseiten der Unterschale der Kabelmuffe aus einem fest angeformten Festteil und einem einsetzbaren Dichtungskörper, wobei sich beide Teile so ergänzen, daß sich am oberen Rand der Unterschale eine durchgehende, stufenlose Trennfläche zum Deckel hin ergibt. In der Trennfläche zwischen dem Festteil und dem Dichtungskörper werden Kabeleinführungsöffnungen eingebracht, so daß auch ungeschnittene Kabel problemlos eingeführt werden können. In Kabeleinführungsöffnungen wie auch in der Trennebene zwischen dem Festteil und dem Dichtungskörper wird elastisches oder plastisches Dichtungsmaterial eingelegt. Anschließend wird der Dichtungskörper am Festteil fixiert. Damit ist die Kabeleinführungsebene nicht identisch mit der Trennebene zwischen der Unterschale und dem Deckel, so daß jederzeit die Kabelmuffe geöffnet werden kann, ohne daß die Kabeleinführungsdichtungen beschädigt werden. Der Dichtungskörper kann beispielsweise an den beiden Randseiten keilförmig ausgebildet sein, so daß sich bei korrespondierender, ebenfalls keilförmiger Ausbildung des Festteils beim Zusammensetzen eine gegenseitige Zentrierung ergibt. Die Fixierung des Dichtungskörpers erfolgt vorzugsweise mit Schneidschrauben am Festteil. Der Dichtungskörper besitzt vorzugsweise auf der zum Festteil weisenden Seite am äußeren und inneren Rand überstehende Lamellen, die beim Fixieren des Dichtungskörpers auf dem Festteil als begrenzende Anschläge dienen. Dadurch wird gewährleistet, daß die eingelegte Dichtung ausreichend verpreßt wird, wobei gleichzeitig der maßgenaue Abschluß in der Trennungsebene zum Deckel hin gewährleistet ist. Dadurch entsteht immer ein einheitlicher Übergang ohne Stufe in der Trennungsebene der Unterschale. Außerdem sind im Festteil wie auch im Dichtungskörper in Achsrichtung hintereinander liegende Lamellen angeordnet, die vorzugsweise zusätzlich mit V-Nuten versehen sind. Auf diese Weise wird eine bessere Verdrückung des Dichtungsmaterials erreicht. Vorzugsweise ist das Festteil in der Unterschale mit einer äußeren und inneren Lamelle versehen, die zusammen eine Kammer bilden und der Aufnahme des Dichtungskörpers dienen. Auf diese Weise ist eine einwandfreie Fixierung in Achsrichtung des Dichtungskörpers gegeben, so daß eine axiale Verschiebung ausgeschlossen ist. Weiterhin können am Dichtungskörper seitlich Nuten angebracht werden, in die entsprechend angeordnete Federn der Unterschale eingreifen, so daß weiterhin eine paßgenaue und verdrehsichere Positionierung in der Unterschale gegeben ist. An dem Dichtungskörper können weiterhin entsprechende Ansätze, Bohrungen oder Halterungen vorgesehen werden, in bzw. an denen weitere Muffenelemente wie zum Beispiel Halterungen für Lichtwellenleiter-Überlängen eingesetzt werden. Außerdem kann der Dichtungskörper auch mit Spezialeinlässen versehen werden, wie zum Beispiel mit einem Einführungsstutzen oder einer Stopfbuchse. Auf diese Weise können dann auch nachträglich ohne Beeinträchtigung bereits montierter Kabel zusätzliche Kabel in die Muffe eingeführt werden. Der Dichtungskörper besteht vorzugsweise ebenfalls aus thermoplastischem Kunststoff, wie zum Beispiel Polypropylen, wobei beispielsweise bei der Ausführungsform mit Kabeleinführungsstutzen zusätzlich ein Schrumpfschlauchstück zum Abdichten eingesetzt werden kann.

Anschließend an die Dichtungsbereiche in den Kabeleinführungen können direkt Kabelabfangvorrichtungen eingesetzt werden. Hierfür sind beispielsweise Aufnahmeelemente zur Fixierung von Kabelabfangvorrichtungen im Inneren der Kabelmuffe anschließend an das Festteil in der Unterschale angeordnet. Auch hier werden durch Ausformung entsprechender Lamellen Kammern gebildet, in die dann die Kabelabfangvorrichtungen eingesteckt werden können. Auf diese Weise sind diese Kabelabfangvorrichtungen in Achsrichtung und gegebenenfalls bei entsprechenden Arretierungen auch drehsicher verankert.Hierfür werden verschiedene Abfangprinzipien angewendet, zum Beispiel die Kabelabfangung durch Klemmung eines Kabelmantellappens oder durch Klemmung des Kabelmantels über den gesamten Umfang. Hierfür werden anhand der entsprechenden Figuren mehrere Ausführungsbeispiele angegeben.

Die Abdichtung der eingeführten Kabel erfolgt in den Kabeleinführungen mit Hilfe plastischer Dichtmasse durch Aufwikkeln auf die Kabel oder mit Hilfe von entsprechend geformten Dichtstücken, insbesondere bei Mehrfacheinführungen. Die Dichtung der Unterschale zum Deckel erfolgt vorzugsweise mit einer elastischen Dichtung, so daß eine Wiederverwendbarkeit beim Öffnen der Muffe gewährleistet ist. Zur besseren Funktion kann die Dichtung jedoch auch als Kombinationsdichtung ausgeführt sein, das heißt die Dichtung besteht aus einem elastischen und aus einem plastischen Teil.

Die Kabelmuffe gemäß der Erfindung ist aufgrund dieser bereits beschriebenen und der speziellen Grundausrüstung für die Bedürfnisse einer Lichtwellenleiter-Muffe universell einsetzbar. So sind beispielsweise an den Längsseiten der Unterschale im Inneren Aufnahmenuten, die beispielsweise hinterschnitten sind, zum variablen Einschieben von Spleißkassettenhaltern angeordnet. Weiterhin sind stirnseitig Taschen zum Einstecken verschiedener Kabelabfangungen vorgesehen, wobei sich hier speziell für die Abfangung von Lichtwellenleiter-Kabeln modifizierte Kabelabfangvorrichtungen einsetzen lassen. Außerdem sind im Inneren bereits Aufnahmepunkte zur Fixierung von weiteren Lichtwellenleiter-Komponenten, zum Beispiel eines Zentralelementes oder eines Zentralrohres, vorgesehen. Weiterhin ist die Unterseite der Schale mit Befestigungspunkten zum Anschrauben von Wand-, Mast- oder Tragseilbefestigungen versehen. Diese Befestigungspunkte sind jeweils als Sackloch ausgeführt und können mit selbstschneidenden Schrauben durchbrochen werden. Für diesen Zweck können auch auf der Außenseite eingespritzte Gewindeeinsätze vorgesehen werden.

Bei Verwendung der Kabelmuffe gemäß der Erfindung als Lichtwellenleiter-Muffe ist das Grundprinzip darin zu sehen, daß zwei Ebenen geschaffen werden, wobei in der unteren Ebene im wesentlichen die Lichtwellenleiter-Überlängen abgelegt werden, während in der oberen Ebene die Spleißkassetten angeordnet werden. Für die übersichtliche Anordnung der Lichtwellenleiter-Spleißkassetten wird ein Kassettenhalter verwendet, der mit entsprechenden Halterungen in den seitlich angeordneten Nuten der Unterschale eingesetzt wird. Der Kassettenhalter besteht vorzugsweise aus mehreren einzelnen zusammensteckbaren Elementen und einer Abschlußplatte, so daß er je nach individueller Kassettenanzahl zusammengesetzt werden kann. Auf die Rückseite der Elemente wird ein Scharnier mit Befestigungsbeinen aufgeschoben, die in die erwähnten integrierten Nuten der Unterschale eingeschoben werden. Durch das Scharnier kann der Kassettenhalter bei der Montage weggeklappt werden, so daß voller Zugriff auf die in der ersten Ebene befindlichen Lichtwellenleiter-Überlängen gegeben ist. An den Befestigungsbeinen sind vorzugsweise nach unten gerichtete Haken angesetzt, so daß die LichtwellenleiterÜberlängen zurückgehalten werden und nicht in den oberen Spleißraum aufspringen. Derartige Haken können rundum als Lichtwellenleiter-Niederhalter in der Unterschale eingesetzt werden. Weiterhin können in der Unterschale geeignete Abfangelemente zur Abfangung des Zentralelementes bzw. des Zentralrohres eines Lichtwellenleiter-Kabels angeordnet werden. Entsprechende Ausführungsbeispiele werden anhand von Figuren näher erläutert.

Die Erfindung wird nun anhand von 18 Figuren näher erläutert.
- Figur 1: zeigt die geschlossene Kabelmuffe.
- Figur 2: zeigt die Unterschale in der Kabelmuffe.
- Figur 3: zeigt den Deckel der Kabelmuffe.
- Figur 4: zeigt die geschlossene Kabelmuffe in einer Ansicht auf die Scharnierseite.
- Figur 5: zeigt das Scharnier.
- Figur 6: zeigt die Ausbildung eines Scharnieransatzes.
- Figur 7: zeigt einen Dichtungskörper in einer perspektivischen Draufsicht.
- Figur 8: zeigt den Dichtungskörper nach Figur 7 von unten gesehen.
- Figur 9: zeigt einen Dichtungskörper mit einer Stopfbuchse.
- Figur 10: zeigt ein Verschlußelement.
- Figur 11: zeigt ein Abfangelement für Kabelmantellappenklemmung.
- Figur 12: zeigt den Einsatz des Abfangelementes nach Figur 11.
- Figur 13: zeigt eine einfache Kabelabfangung
- Figur 14: zeigt eine Dreifach-Kabelabfangung.
- Figur 15: zeigt eine Vierfach-Kabelabfangung.
- Figur 16: zeigt die Kabelmuffe mit einem Lichtwellenleiter-Kassetteneinsatz.
- Figur 17: zeigt einen Kassettenhalter.
- Figur 18: zeigt eine Abfangung für Zentralelemente von Lichtwellenleiter-Kabeln.

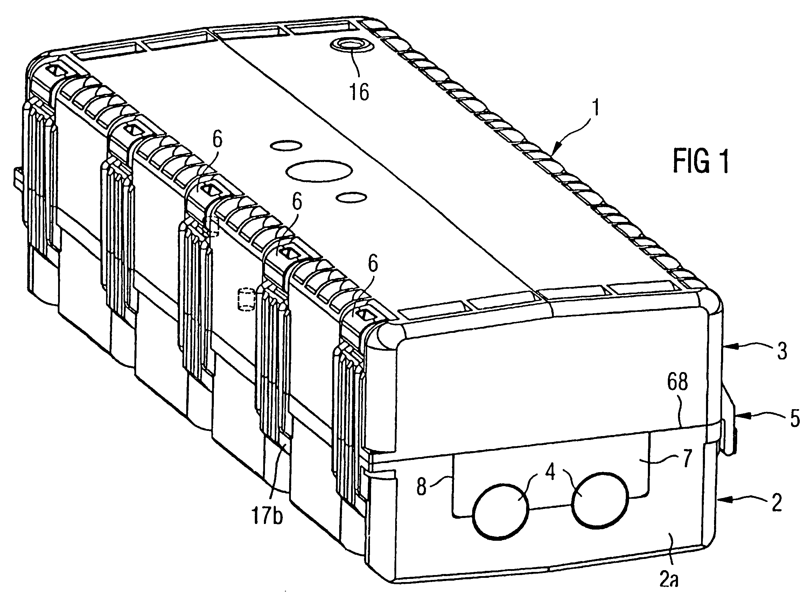

In Figur 1 ist die Kabelmuffe 1 gemäß der Erfindung im kompletten Zustand dargestellt. Sie besteht aus einer Unterschale 2, in deren Stirnseite ein Dichtungskörper 7 in einem durch die Trennfläche 8 markierten Ausschnitt eingesetzt ist. In der Trennfläche 8 sind Kabeleinführungsöffnungen vorgesehen, so daß auch ungeschnittene Kabel eingeführt werden können. Der obere Rand der Unterschale 2 schließt mit dem Oberrand des Dichtungskörpers 7 in der Dichtungsebene 68 zum Deckel stufenlos ab, so daß eine durchgehende Dichtungsebene 68 zum Deckel 3 hin vorhanden ist. Auf der rechten Seite sind gerade noch die Ansätze für das Scharnier 5 erkennbar, über das der Deckel 3 mit Unterschale 2 klappbar verbunden ist. Auf der linken Längsseite der Kabelmuffe 1 sind die Verschlußelemente 6 dargestellt, die in entsprechende Ansätze der Unterschale 2 bzw. des Deckels 3 unverlierbar eingerastet sind. Im Deckel 3 ist weiterhin angedeutet, daß entsprechende Öffnungen, wie zum Beispiel ein Sackloch 16, für eventuelle Durchführungen oder Einfüllöffnungen vorgesehen werden können.

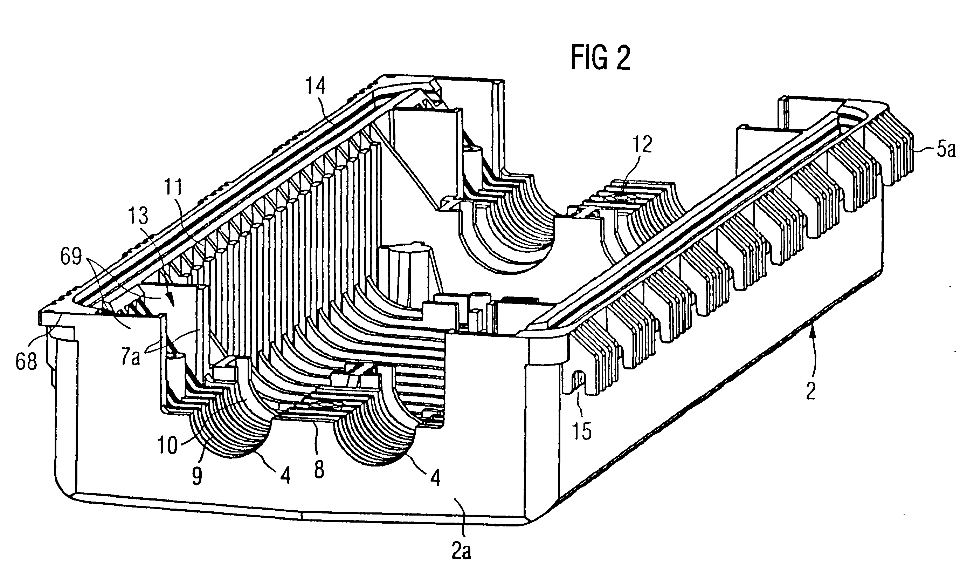

Figur 2 zeigt die Unterschale 2 im geöffneten Zustand der Kabelmuffe bei abgenommenem Deckel. So sind entlang der rechten Längsseite der Unterschale 2 mehrere Ansätze 5a für das Scharnier vorgesehen, in deren Öffnungen 15 die korrespondierenden Elemente des Deckels eingehakt werden. In der Stirnseite der Schale 2 ist der Dichtungskörper entnommen, so daß die Profilierung des Eingangsbereiches sichtbar ist. Daraus geht hervor, daß die Stirnseite aus hintereinander liegenden Lamellen 9 besteht, so daß eine dem Dichtungsdruck entsprechende Verdrängung der später eingelegten Dichtungsmasse in die dazwischen liegenden Hohlräume erfolgen kann. Dabei ist erkennbar, daß zu beiden Seiten des durch die Trennfläche 8 markierten Ausschnittes eine innere und äußere Lamelle 69 hochgezogen ist bis zum oberen Rand und dadurch beidseitig jeweils eine Kammer 13 bilden. In diese Kammer 13 wird der hier entnommene Dichtungskörper 7 eingesetzt, so daß seine Lage eindeutig fixiert werden kann.
Die seitlichen Wände dieser Kammer 13 verlaufen schräg, vorzugsweise die Kammer 13 nach oben hin keilförmig erweiternd, so daß ein ebenfalls keilförmig angepaßter Dichtungskörper 7 eindeutig fixiert werden kann. Die Fixierung des Dichtungskörpers 7 in der Unterschale erfolgt vorzugsweise mittels Schneidschrauben. Weiterhin ist-erkennbar, daß sich an den Dichtungsbereich eine Aufnahmekammer 10 für Kabelabfangelemente anschließt. In diese Aufnahmekammern 10 werden Klemmelemente für den Kabelmantel des eingeführten Kabels eingesetzt, wie später noch erläutert wird. Im Innenraum der Unterschale 2 sind verschiedene Ausgestaltungen von Rippen zu erkennen, die einerseits der Verstärkung der Unterschale 2 dienen, die andererseits jedoch so gestaltet sind, daß sie für weitere Funktionen genützt werden können. So sind beispielsweise die Rippen an den Seitenwänden der Unterschale 2 so gestaltet, daß hinterschnittene Nuten 11 gebildet werden. In diese hinterschnittenen Nuten können nun entsprechende Zusatzteile, wie zum Beispiel Spleißhalter oder Niederhalter für Lichtwellenleiter-Adern, eingesetzt und fixiert werden. Diese Ausgestaltung des Innenraumes gewährleistet einen universalen Einsatz der Kabelmuffe für hergebrachte Kupferaderkabel wie auch für Lichtwellenleiter-Kabel. Die Öffnungen 12 dienen zur Einführung der Schrauben, mit denen der Dichtungskörper jeweils fixiert wird. Im mittleren Bereich der Dichtungsebene ist eine Abdrückfläche 12a zum Wiederöffnen des Dichtungskörpers angeordnet. Hierbei wird in die korrespondierende Öffnung des Dichtungskörpers eine Schraube eingedreht, die sich gegen die Abdrückfläche 12a abdrückt und so den Dichtungskörper anhebt. Es kann hier auch ein Metalleinsatz eingepreßt werden. Schließlich ist noch die Dichtungsnut 14 erkennbar, in die vorzugsweise eine elastische Dichtung eingebracht wird, die mehrmaliges Öffnen an der Kabelmuffe zuläßt, ohne daß sie dabei zerstört wird. Die Dichtungsnut 14 läuft an den Stirnseiten in die Dichtungsnuten der Dichtungskörper nach deren Einsatz stufenlos über.

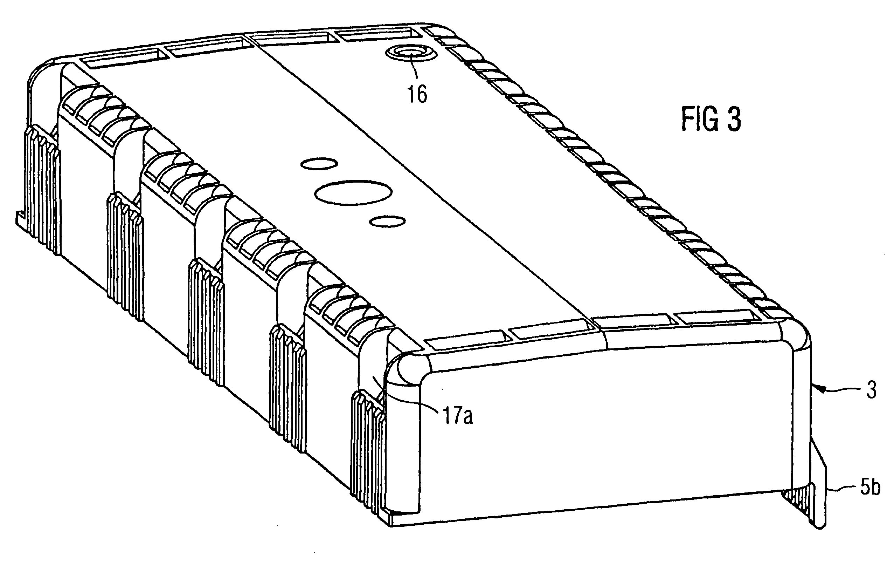

Figur 3 zeigt den Deckel 3 der Kabelmuffe, wobei hier in erster Linie die Ansätze 17a für die Verschlußelemente zu sehen sind. In diese Ansätze 17a werden die Verschlußelemente unverlierbar eingerastet, wobei die äußeren Rippen als Schutz gegen unbeabsichtigtes Öffnen der Halteelemente ausgebildet sind. Auf der rechten Seite des Deckels 3 sind die zur Unterschale korrespondierenden Scharnierelemente 5b erkennbar.

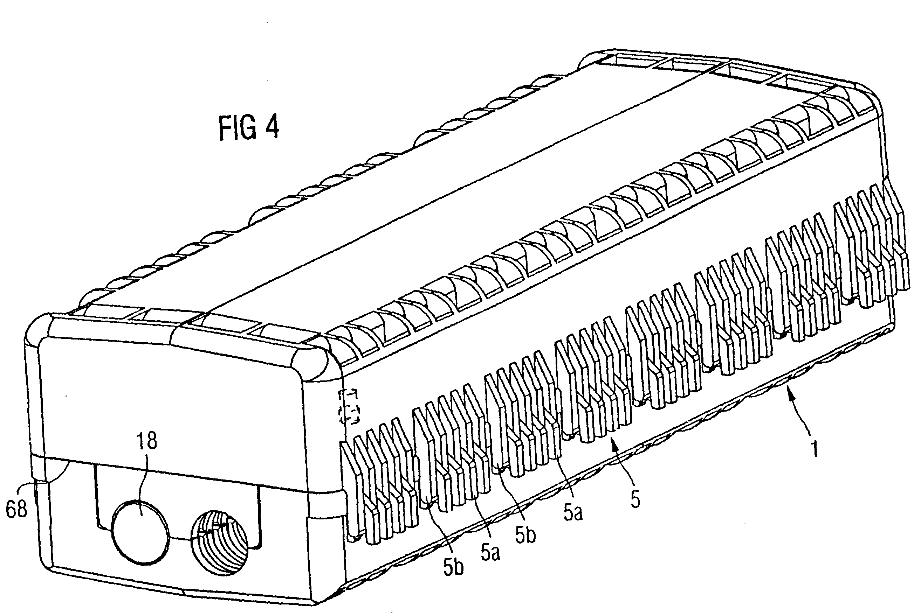

Die Figur 4 zeigt eine Ansicht der Kabelmuffe 1 auf ihre Scharnierseite, wobei das Scharnier 5 aus den Scharnierelementen 5a und 5b gebildet wird. Die Scharnierelemente 5a der Unterschale 2 sind nach unten schlitzförmig geöffnet und in diese Schlitze werden die korrespondierenden Scharnierelemente 5b des Deckels rastend eingeführt. Die Ausgestaltung des Scharniers 5 ist so konstruiert, daß der Deckel im geöffneten Zustand arretiert werden kann. Außerdem kann die Rasterung in einer bestimmten Stellung überwunden werden, so daß der Dekkel beispielsweise bei Montagearbeiten voll abgenommen werden kann. Bei dieser Darstellung ist der Dichtungskörper in der Stirnseite eingesetzt , wobei eine Kabeleinführungsöffnung mit einem Blindstopfen 18 verschlossen ist.

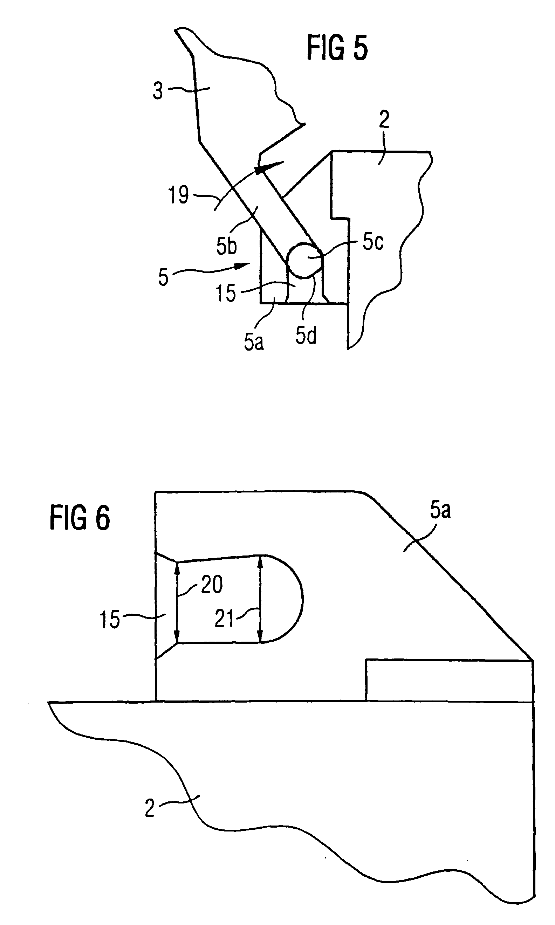

In Figur 5 ist im Detail die Ausführung des Scharniers 5 dargestellt. So wird deutlich, daß das Scharnierelement 5b des Deckels 3 eine Achse 5c am Ende aufweist, die in den Schlitz 15 des Scharnierelements 5a von unten her eingeführt ist. Dabei ist zu beachten, daß Achse 5c am Umfang eine Abflachung 5d aufweist. Der Pfeil 19 bedeutet die Schwenkrichtung des Deckels 3 an.

Figur 6 verdeutlicht den Schlitz 15 des Scharnierelementes 5a an der Unterschale 2. Hieraus wird ersichtlich, daß der Schlitz im inneren Endbereich kreisförmig endet, wobei dieses Ende einen Durchmesser 21 aufweist, der dem Durchmesser der Achse 5c des korrespondierenden Scharnierelementes entspricht. Im Eingangsbereich des Schlitzes ist die Öffnung jedoch verengt auf eine Distanz 20, die geringer ist als der Durchmesser 21. Die Distanz 20 entspricht jedoch der Distanz der Achse 5c im Bereich der Abflachung 5d. So ist möglich, daß das korrespondierende Scharnierelement des Deckels nur eingeführt werden kann, wenn der Deckel 3 so geklappt ist, daß die Achse 5c infolge ihrer Abflachung 5d durch den verengten Schlitzausgang hindurchgeführt werden kann.

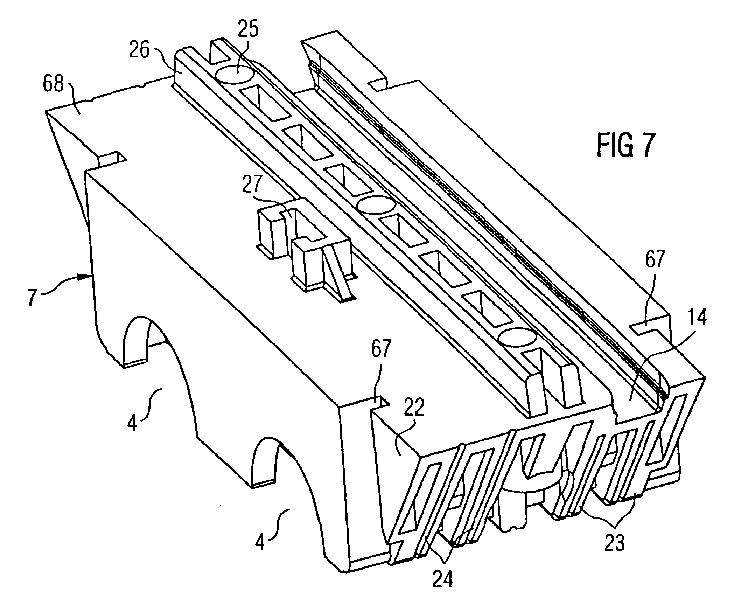

Die Figur 7 zeigt den Dichtungskörper 7 mit seinen halben Kabeleinführungsöffnungen 4 in einer perspektivischen Draufsicht. Daraus ist ersichtlich, daß die keilförmig zulaufenden Seitenwände 23 ebenfalls lamellenförmig ausgebildet sind, so daß auch hier die gleichen Dichtungsverhältnisse vorliegen wie im Kabeleinführungsbereich. Außerdem sind in den Lamellen 23 noch zusätzlich Verdrängungsnuten 24 enthalten. In den Stirnseiten des Dichtungskörpers 7 sind weiterhin Nuten 67 eingebracht, in die entsprechende Abwinkelungen 7a der die Kammer 13 bildenden äußeren und inneren Lamellen 69 der Unterschale 2 eingreifen. Auf diese Weise ist auch eine Verdrehsicherung des Dichtungskörpers 7 in der Kammer 13 der Unterschale 2 gegeben. Außerdem wird hierdurch eine sichere Führung des Dichtungskörpers 7 beim Zusammensetzen ermöglicht. Außerdem kann ein Verdrehschutz auch dadurch gewährt werden, daß sich am Dichtungskörper beispielsweise nur drei Nuten 67 befinden, in die dann entsprechend auch nur drei Abwinkelungen 7a der Unterschale 2 eingreifen. Eine zusätzliche Leiste 26 auf der oberen Fläche des Dichtungskörpers 7 ermöglicht mit entsprechenden Ausformungen zusätzliche Möglichkeiten zur Arretierung von Befestigungen und dergleichen. Außerdem sind hier die Öffnungen 25 für die Schneidschrauben eingelassen. Weiterhin ist der im Dichtungskörper 7 verlaufende Teil der umlaufenden Dichtungsnut 14 erkennbar. Im Innenbereich des Dichtungskörpers 7 können auch zusätzliche Fixierelemente 27 angesetzt werden, in oder an denen erforderliche Organisierelemente angesetzt werden können.

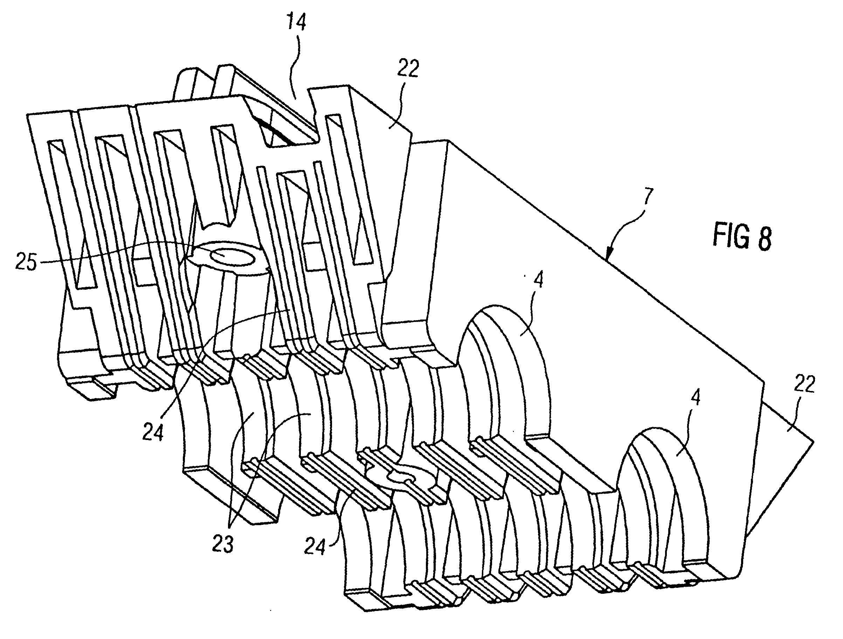

Figur 8 verdeutlicht den Dichtungskörper 7 in einer perspektivischen Unteransicht, wobei hier die Ausbildung der hintereinander liegenden Lamellen 23 im Dichtungsbereich deutlich wird. In den Auflagebereichen zur Unterschale hin sind diese Lamellen 23 zusätzlich mit Verdrängungsnuten 24 versehen. Weiterhin wird hier die keilförmige Ausbildung des Dichtungskörpers 7 deutlich, wobei die seitlichen dreieckförmigen Bereiche 22 in die Kammer 10 der Unterschale geführt werden. Der im Dichtungskörper 7 verlaufende Teil der Dichtungsnut 14 ist ebenfalls erkennbar. Die Bohrungen 25 dienen zur Aufnahme der Schneidschrauben für die Fixierung des Dichtungskörpers 7 in der Unterschale.

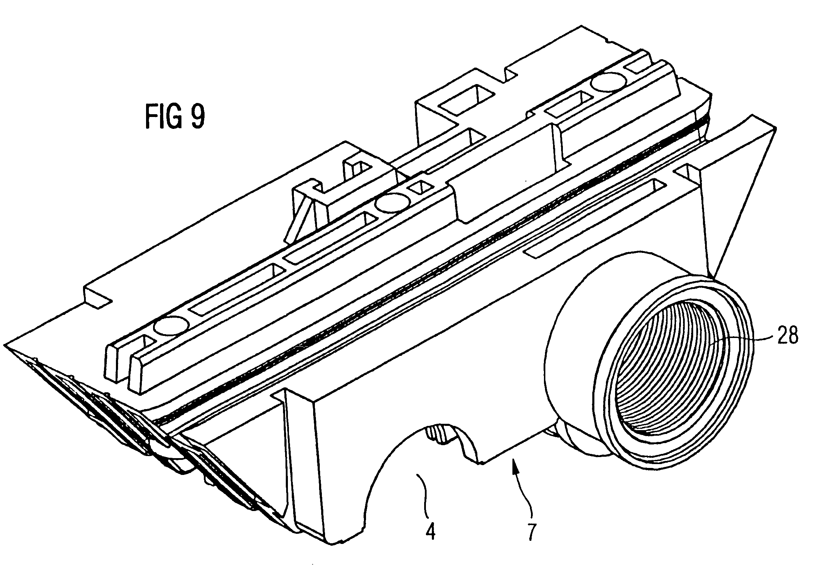

Die Figur 9 verdeutlicht einen Dichtungskörper 7, der neben der normalen Kabeleinführungsöffnung 4 zusätzlich eine fest angeformte Stopfbuchse 28 aufweist. Durch diese Maßnahme wird gewährleistet, daß nachträglich ein Kabel eingeführt werden kann, ohne daß die bereits bestehende Kabeleinführung beschädigt wird. Das neu einzuführende Kabel wird durch die Einführungsöffnung der Stopfbuchse eingeführt und in der an sich bekannten Weise abgedichtet. Ein derartiger Dichtungskörper 7 wird somit eingesetzt, wenn zu erwarten ist, daß zu einem späteren Zeitpunkt eine Nachrüstung bzw. Neueinführung eines Kabels zu erwarten ist.

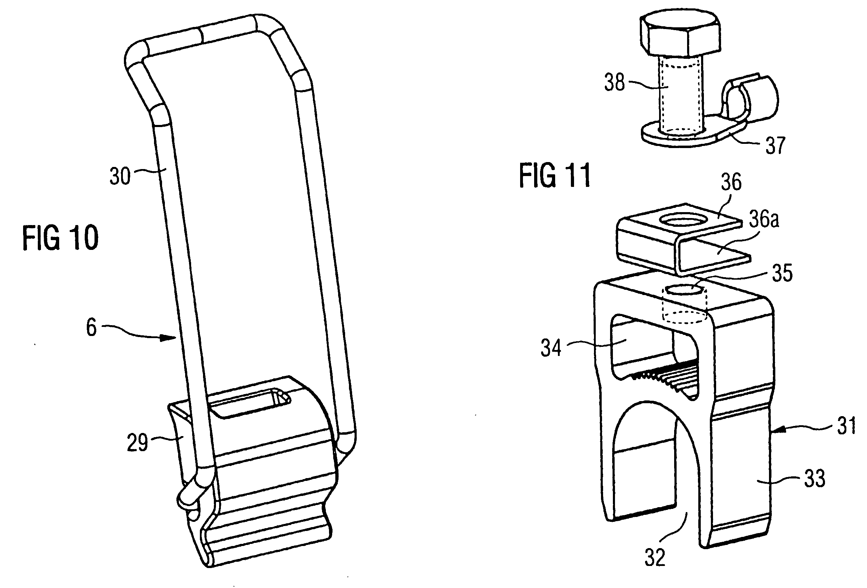

Die Figur 10 zeigt ein Verschlußelement 6, das aus einem Spannelement 29 und einem Drahtbügel 30 besteht. Das Spannelement 29 wird unverlierbar in entsprechende Ansätze in den Seitenwänden der Kabelmuffe eingerastet. Beim Verschließen wird das Schlaufenende des Drahtes 30 in den entsprechenden Ansatz in der Seitenwand der Kabelmuffe eingehakt und mittels des Spannelementes 29 wird der Verschluß rastend gespannt.

Figur 11 zeigt eine Kabelmantelabfangvorrichtung 31 für Kupfer- und Lichtwellenleiter-Kabel mit integrierter Schirmkontaktierung. Mit diesem Abfangelement 31 können mechanische Belastungen wie Zug, Schub oder Torsion abgefangen werden. Außerdem ist möglich, den Kabelschirm elektrisch zu kontaktieren. Hier handelt es sich beispielsweise um ein metallisch leitendes Bauelement, mit welchem gleichzeitig der Kabelschirm kontaktiert und mechanische Kräfte aufgenommen werden können. Bei der Montage wird der Kabelmantel mit zwei Schnitten längsseitig eingeschnitten, so daß sich ein Kabelmantellappen bildet. Dieser Kabelmantellappen wird in die obere Öffnung 34 der Abfangvorrichtung 31 eingefädelt. Durch Anziehen der Schraube 38 wird der Kabelmantel über ein Andruckelement 36 geklemmt. Dabei wird das U-förmig ausgebildete Andruckelement 36 mit seiner Andruckplatte 36a in den Schlitz 34 eingeführt. Durch die Öffnung des zweiten Schenkels des Andruckselementes 36 wird die Schraube 38 hindurchgeführt und in das Gewinde 35 eingedreht bis die Andruckplatte 36a den im Schlitz 34 eingeführten Kabelmantellappen ausreichend klemmt. Dazwischen kann noch ein Kabelschuh 37 eingesetzt werden, an dem dann die Schirmkontaktierung vorgenommen wird. Die Abfangvorrichtung 31 wird mit seinen beiden Schenkeln 33 in die entsprechende Aufnahmekammer 10 der Unterschale 2 eingesteckt, wobei das Kabel durch die Öffnung 32 hindurchgeführt wird. Die Kontaktierung im Abfangelement kann mit angeformten Spitzen im Schlitz 34 verbessert werden. Anstatt der angeformten Spitzen besteht auch die Möglichkeit der Kontaktierung durch Unterschieben eines Kontaktbleches, welches mit Durchrissen versehen ist. Diese Durchrisse drücken sich beim Anziehen der Klemmschraube 38 in den Aluminiumschirm des Kabels ein. Die Schirmverbindung nach außen erfolgt ebenfalls mittels eines Erdseils unter der Klemmschraube 38 oder durch eine Erdleitung die mittels eines Kabelschuhs 37 direkt an eine integrierte Steckfahne am Kontaktblech aufgesteckt bzw. direkt am Kontaktblech verlötet ist. Bei der Ausführung mit Kontaktblech bzw. Ausführung des Andruckelementes 36 in Metall kann die Abfangvorrichtung 31 auch als Kunststoffteil ausgeführt sein.

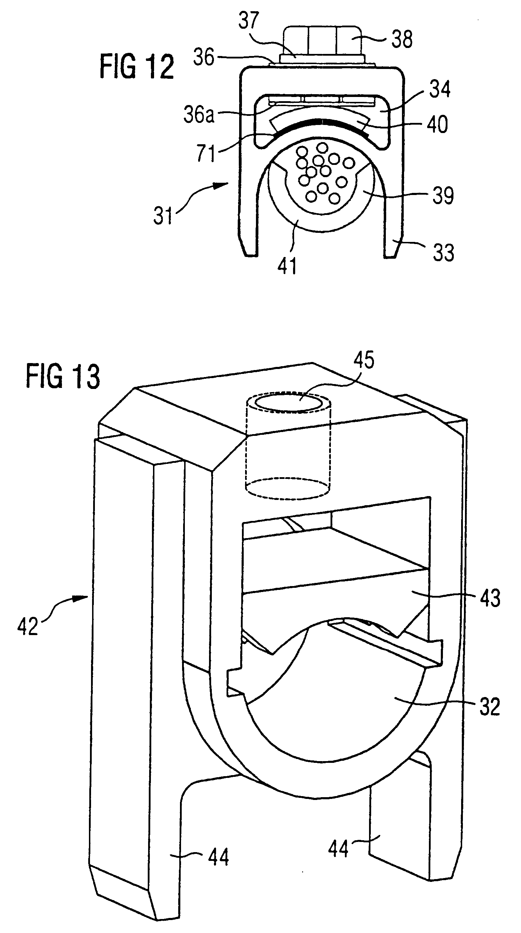

Figur 12 zeigt die Abfangvorrichtung 31 in montiertem Zustand, wobei hier beispielsweise ein Kontaktblech 71 für die Kontaktierung des Kabelschirms eingesetzt ist. Im übrigen ist daraus zu erkennen, daß der Kabelmantel 39 längsseitig aufgeschnitten ist und einen Kabelmantellappen 40 bildet, der in dem Schlitz 34 eingeführt und mit Hilfe der Andruckplatte 36a des Andruckelementes 36 geklemmt ist. Zusätzlich ist auch hier ein Kabelschuh 37 eingefügt, an dem die Schirmkontaktierung erfolgen kann, wenn das eingefügte Kontaktblech 71 entfällt. Zwischen den beiden Schenkeln 33 des Abfangelementes 31 wird das Kabel mit seinen Adern 41 hindurchgeführt.

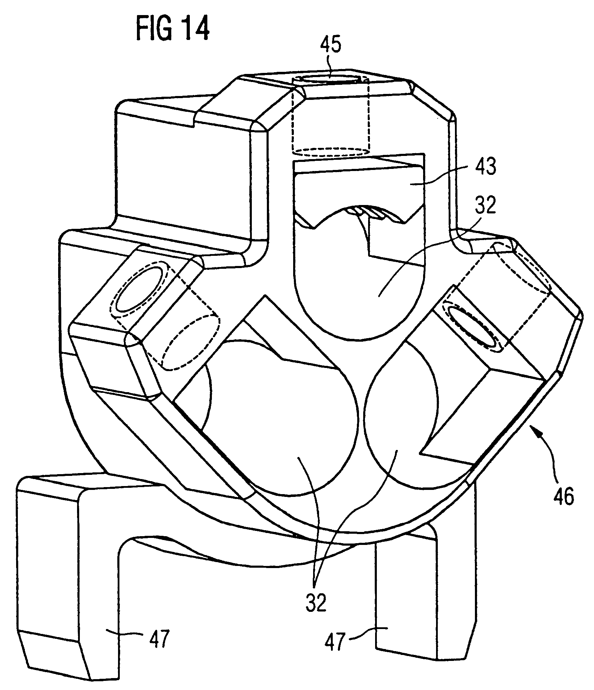

In Figur 13 ist eine Abfangvorrichtung 42 dargestellt, das in der Wirkungsweise in dem Abfangelement nach Figur 11 entspricht, wobei hier die Klemmung allerdings auf dem gesamten Umfang des Kabelmantels mit Hilfe des Druckelementes 43 erfolgt. Das in die Durchführungsöffnung 32 eingefügte Kabel wird somit beinahe rundum fixiert. Seitliche Nuten erhöhen die Griffigkeit und verbessern die Torsionsfestigkeit. In die mit Gewinde versehene Öffnung 45 wird eine Druckschraube eingedreht. Mit den beiden Schenkeln 44 erfolgt die Fixierung in der Aufnahmekammer 10 der Unterschale.

Figur 14 zeigt eine Abfangvorrichtung 46 für drei durch die Einführungsöffnungen 32 eingeführte Kabel. Die Klemmung des Kabelmantels erfolgt in diesem Ausführungsbeispiel nach dem Prinzip, das in Figur 13 angegeben ist. Doch sind andere Klemmöglichkeiten bei dieser Anordnung möglich. Mit den Schenkeln 47 kann das Abfangelement 46 ebenfalls in die Abfangkammern 10 der Unterschale eingesetzt werden.

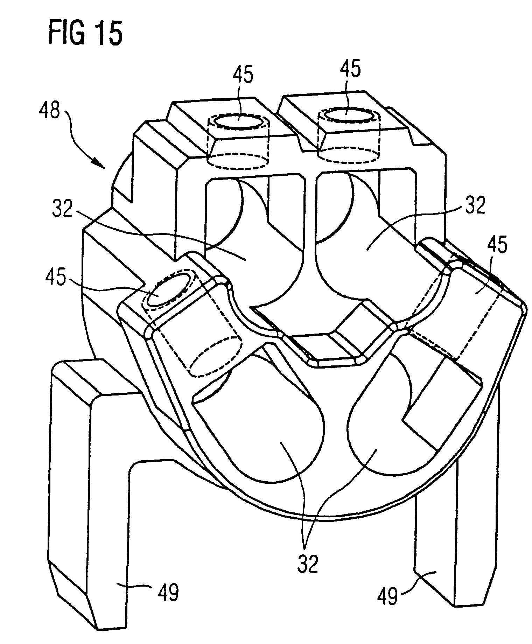

Die Figur 15 zeigt eine Abfangvorrichtung 48 für vier durch die Einführungsöffnungen 32 eingeführte Kabel. Die Klemmung erfolgt wie vorher. Um eine sichere Handhabung zu gewährleisten, sind die Druckelemente mit den Gewindebohrungen 45 in Längsrichtung paarweise versetzt. Die Fixierung dieser Abfangvorrichtung 48 erfolgt ebenfalls mit Hilfe der Schenkel 49 in einer Aufnahmekammer 10 an der Unterschale.

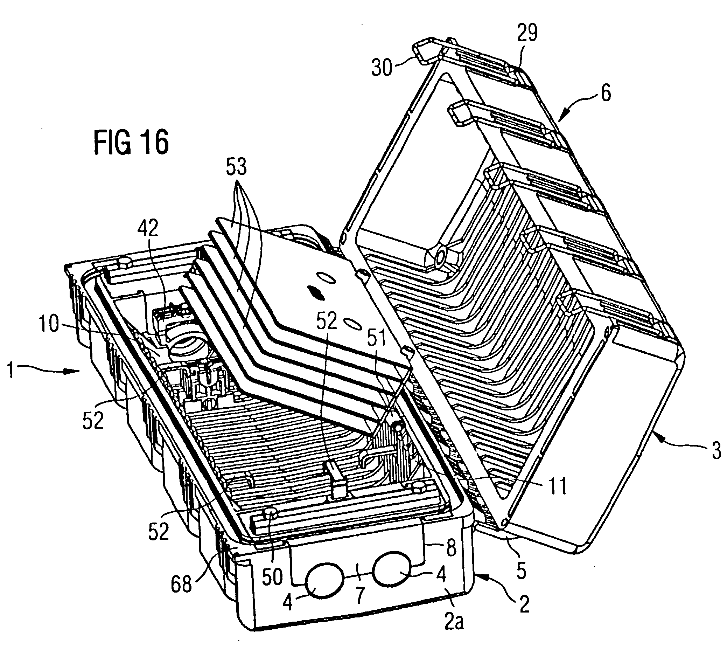

In Figur 16 ist eine Kabelmuffe 1 dargestellt, die für die Aufnahme von Lichtwellenleiter-Kabeln mit entsprechenden Spleißkassetten ausgerüstet ist. Dabei ist die Unterschale 2 in den Stirnseiten jeweils mit Dichtungskörpern 7 versehen, wobei die Kabeleinführungsöffnungen 4 in der Trennebene 8 zwischen dem Dichtungskörper 7 und der Stirnseite der Unterschale 2 angeordnet sind. Der Dichtungskörper 7 ist mit Hilfe von Schneidschrauben 50 in der Unterschale fixiert. Weiterhin ist im hinteren Teil der Unterschale 2 erkennbar, daß in einer Aufnahmekammer 10 ein Kabelabfangelement 42 eingesetzt ist. Über das Scharnier 5 ist der Deckel 3 mit der Unterschale 2 klappbar verbunden. Außerdem wird deutlich, daß die Verschlußelemente 6 in den Ansätzen des Deckels 3 unverlierbar eingerastet sind. Die Drahtschlaufen 30 werden nach dem Schließen der Kabelmuffe in die korrespondierenden Ansätze der Unterschale eingehängt und mit den Spannelementen 29 gespannt. Diese Ausstattung ist als Grundausstattung anzusehen und für die Einführung und Spleißung von Kupferkabeln ausreichend bestückt. Für die Verwendung bei Lichtwellenleiter-Kabeln kann nun diese Kabelmuffe 1 gemäß der Erfindung ohne Veränderung der Grundausstattung für die Bedürfnisse der Spleißung von Lichtwellenleiter-Kabeln ergänzt und optimiert werden. So wurde bei diesem Ausführungsbeispiel durch Einfügung von Lichtwellenleiter-Niederhaltern 52 in der Unterschale 2 ein Freiraum für die Ablegung von Lichtwellenleiter-Überlängen geschaffen. Diese Lichtwellenleiter-Niederhalter 52 sind als U-förmige Winkel ausgebildet, die mit einem Schenkel in den hinterschnittenen Nuten der Unterschale fixiert werden und die mit dem zweiten freien Schenkel verhindern, daß die eingelegten Lichtwellenleier-Überlängen nach oben ausspringen. Auf diese Weise können die Lichtwellenleiter-Überlängen in übersichtlicher Weise im unteren Freiraum der Unterschale 2 der Kabelmuffe geführt werden. Außerdem wird gezeigt, daß ein Kassettenhalter 72 mit mehreren Fachplatten 53 schwenkbar angeordnet ist. In die einzelnen Fächer zwischen den Fachplatten 53 können dann die Lichtwellenleiter-Spleißkassetten eingelegt werden, so daß jede Spleißkassette für sich bei Servicearbeiten entnommen werden kann. Außerdem ist dieser Kassettenhalter mit den Fachplatten 53 schwenkbar, so daß er in die jeweils günstige Montagehaltung geschwenkt werden kann. Der Kassettenhalter mit den Fachplatten 53 wird über entsprechende Gelenke 51 mit Hilfe von Steckfortsätzen 54 in den seitlich in der Unterschale 2 angeordneten hinterschnittenen Nuten 11 eingeschoben und auf diese Weise fixiert. Bei Bedarf kann der gesamte Kassettenhalter 72 aus der Kabelmuffe 1 entnommen werden.

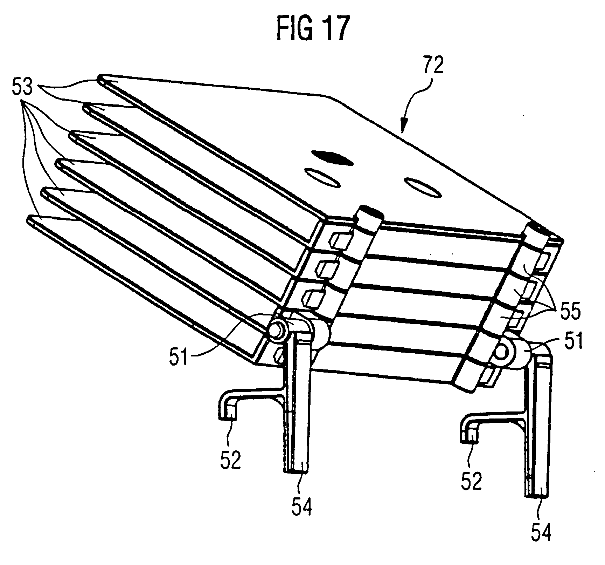

Figur 17 zeigt den Kassettenhalter 72 mit den Fachplatten 53, zwischen denen die Lichtwellenleiter-Spleißkassetten eingefügt werden können. Der Kassettenhalter setzt sich aus mehreren Fachplatten 53 zusammen, wobei jede Fachplatte 53 Steckhülsen 55 aufweist. So kann der Kassettenhalter durch steckbares Aufeinandersetzen von Fachplatten 53 dem jeweiligen Bedarf angepaßt werden. An eine dieser Steckhülsen 55 wird ein Gelenk 51 mit Steckfortsätzen 54 angesetzt. Diese Steckfortsätze 54 können wiederum in die hinterschnitttenen Nuten entlang der Seitenwand der Unterschale 2 eingeschoben werden. Diese Steckfortsätze 54 können auch zusätzlich mit Winkeln versehen werden, die dann als Lichtwellenleiter-Niederhalter 52 dienen.

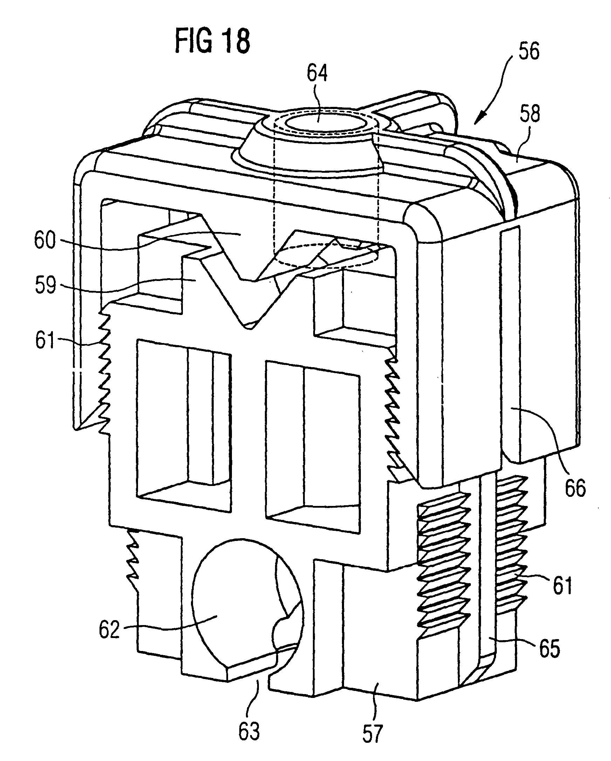

Figur 18 zeigt eine Abfangvorrichtung 56 für Zentralelemente eines Lichtwellenleiter-Kabels, wobei mit dieser Abfangvorrichtung 56 stabförmige Zentralelemente abgefangen und Zentralrohre aufgenommen werden können. Die Abfangvorrichtung 56 besteht aus einem Grundbaustein 57 und einem Klemmteil 58. Der Grundbaustein 57 enthält eine V-Nut 59, in der die stabförmigen Zentralelemente eines Lichtwellenleiter-Kabels eingeklemmt werden. Für die Aufnahme von Zentralrohren von Lichtwellenleiter-Kabeln dient die mit einem Schlitz 63 versehene kreisförmige Öffnung 62. Je nachdem welche Art von Zentralelement vorliegt, wird der Grundbaustein 57 in der entsprechenden Lage in einer der Abfangkammern 10 oder mit Hilfe von Schneidschrauben innerhalb der Unterschale 2 positioniert. Über diesen Grundbaustein 57 wird dann zur Klemmung des jeweiligen Zentralelementes ein U-förmiges Klemmteil 58 aufgeschoben und infolge seitlicher korrespondierender Rastelemente 61 fixiert. Am Grundbaustein 57 sind seitlich Führungsfedern 65 angeordnet, die in seitliche Führungsnuten 66 des Klemmteils 58 eingreifen, so daß das Klemmteil 58 auch in Längsrichtung des eingeführten Zentralelementes fixiert ist. Im Inneren des Klemmteils 58 ist ein Keil 60 angeformt, der den Konturen der V-Nut 59 entspricht. Mit Hilfe einer Klemmschraube, die durch die Gewindeöffnung 64 eingedreht wird, kann das in die V-Nut 59 eingeführte Zentralelement geklemmt werden. Das gleiche erfolgt bei der Fixierung eines rohrförmigen Zentralelementes, wobei dann lediglich der Grundbaustein 57 um 180° gedreht werden muß.

## Patentansprüche

1. Kabelmuffe (1) aus einer Unterschale (2) und einem Deckel (3) zur Aufnahme von elektrischen oder optischen Spleißen, wobei mindestens eine Stirnseite der Unterschale (2) aus einem Festteil (2a) und einem herausnehmbaren Dichtungskörper (7) besteht, wobei weiterhin in der Trennfläche (8) zwischen dem Festteil (2a) und dem Dichtungskörper (7) Kabeleinführungsöffnungen (4) angeordnet sind,
**dadurch gekennzeichnet,**
daß das Festteil (2a) der Stirnseite aus mehreren in Achsrichtung der Kabeleinführungen hintereinander liegenden steifen Lamellen (9) gebildet ist, die quer zur Achsrichtung verlaufen, wobei die äußersten und innersten Lamellen (69) bis zum obersten Rand hochgezogen sind und eine Kammer (13) zur Aufnahme des Dichtungskörpers (7) bilden, daß der Dichtungskörper (7) ebenfalls zur Trennfläche (8) weisende und den Lamellen (9) der Unterschale (2a) entsprechende Lamellen (23) aufweist, daß der Dichtungskörper (7) im Festteil (2a) der Stirnseite so fixierbar ist, daß nach Einlage von Dichtungsmaterial in der Trennfläche (8) zwischen dem Festteil (2a) und dem Dichtungskörper (7) eine umlaufend stufenlose Dichtungsebene (68) zwischen Unterschale (2) und Deckel (3) gebildet ist, daß Aufnahmekammern (10) zur Fixierung von Kabelabfangvorrichtungen (31, 42,46, 48, 56) im Innern der Kabelmuffe (1) anschließend an das Festteil (2a) der Unterschale (2) angeordnet sind, daß der Deckel (3) an der Unterschale (2) über mindestens ein Scharnier (5) entlang einer Seite klappbar verbunden ist und daß Ansätze (17a, 17b) zum Einsatz von Verschlußelementen (6) an den gegenüber liegenden Seiten des Deckels (3) und der Unterschale (2) angeordnet sind.

2. Kabelmuffe nach Anspruch 1,
**dadurch gekennzeichnet,**
daß das Scharnier (5) aus mehreren einzelnen Ansätzen gebildet ist.

3. Kabelmuffe nach einem der vorhergehenden Ansprüche,
**dadurch gekennzeichnet,**
daß das Scharnier (5) in korrespondierende Scharnierelemente (5a, 5b) trennbar ist, so daß der Deckel (3) von der Unterschale (2) abnehmbar ist.

4. Kabelmuffe nach Anspruch 3,
**dadurch gekennzeichnet,**
daß die korrespondierenden Scharnierelemente (5a, 5b) (5) rastbar ineinandergeführt sind.

5. Kabelmuffe nach einem der vorhergehenden Ansprüche,
**dadurch gekennzeichnet,**
daß ein Sackloch (16) im Deckel (3) für Durchführungen angeordnet ist.

6. Kabelmuffe nach einem der vorhergehenden Ansprüche,
**dadurch gekennzeichnet,**
daß die Seitenwände (23) des Dichtungsksörpers (7) keilförmig zulaufen und daß die Seitenwände der Kammer (13) dieser Keilform angepaßt sind.

7. Kabelmuffe nach einem der vorhergehenden Ansprüche,
**dadurch gekennzeichnet,**
daß die Seitenwände im Inneren der Unterschale mit Rippen versehen sind, die vorzugsweise hinterschnittene Nuten (11) bilden.

8. Kabelmuffe nach einem der vorhergehenden Ansprüche,
**dadurch gekennzeichnet,**
daß die Ansätze (17a, 17b) für die Aufnahme von Verschlußelementen (6) als Vertiefungen in der Unterschale (2) und des Deckels (3) ausgebildet sind.

9. Kabelmuffe nach einem der vorhergehenden Ansprüche,
**dadurch gekennzeichnet,**
daß nicht benutzte Kabeleinführungsöffnungen (4) mit Blindstopfen (18) verschlossen sind.

10. Kabelmuffe nach Anspruch 3,
**dadurch gekennzeichnet,**
daß das Scharnierelement (5a) der Unterschale (2) einen Schlitz (15) zur Aufnahme der Achse (5c) des Scharnierelements (5b) des Deckels (3) aufweist, wobei der Schlitz (15) an seinem offenen Ende auf eine Distanz (20) verengt ist, die geringer ist als der Durchmesser (21) der Achse (5c) des Scharnierelementes (5b) des Deckels (3).

11. Kabelmuffe nach Anspruch 10,
**dadurch gekennzeichnet,**
daß die Achse (5c) eine Abflachung (5d) aufweist, die eine Herausnahme bzw. Einführung durch die verengte Distanz (20) des Schlitzes (15) zuläßt.

12. Kabelmuffe nach einem der vorhergehenden Ansprüche,
**dadurch gekennzeichnet,**
daß die Lamellen (9, 23) der Einführungsöffnungen (4) und die Lamellen der Seitenwände (23) der Kammer (10) und des Dichtungskörpers (7) zusätzliche Dichtungsmaterial aufnehmende Verdrängungsnuten (24) enthalten.

13. Kabelmuffe nach einem der vorhergehenden Ansprüche,
**dadurch gekennzeichnet,**
daß der Dichtungskörper (7) im Innenbereich zusätzliche Leisten (27) zur Fixierung von Befestigungselementen aufweist.

14. Kabelmuffe nach einem der vorhergehenden Ansprüche,
**dadurch gekennzeichnet,**
daß der Dichtungskörper (7) Nuten (67) zum Eingriff von Abwinkelungen (7a) der durch die Lamellen (69) gebildeten Kammer (13) aufweist.

15. Kabelmuffe nach einem der vorhergehenden Ansprüche,
**dadurch gekennzeichnet,**
daß der Dichtungskörper (7) eine angeformte Stopfbuchse (28) zur Aufnahme von Kabeln aufweist.

16. Kabelmuffe nach einem der vorhergehenden Ansprüche,
**dadurch gekennzeichnet,**
daß ein Verschlußelement (6) vorgesehen ist, welches aus einem in den jeweiligen Ansatz (17a) des Deckels (3) unverlierbar einrastbaren Spannelement (29) und einem Drahtbügel (30) besteht, der in den jeweiligen Ansatz (17b) der Unterschale (2) einhakbar ist.

17. Kabelmuffe nach einem der vorhergehenden Ansprüche,
**dadurch gekennzeichnet,**
daß eine Kabelabfangvorrichtung (31) vorgesehen ist, welche eine Öffnung (34) zur Aufnahme und Klemmung eines Kabelmantellappens (40) mittels eines Andruckelementes (36) aufweist.

18. Kabelmuffe nach einem der Ansprüche 1 bis 16,
**dadurch gekennzeichnet,**
daß eine Kabelabfangvorrichtung (42) vorgesehen ist, welche ein bewegliches Druckelement (43) für die Klemmung auf dem Kabelmantel aufweist.

19. Kabelmuffe nach einem der vorhergehenden Ansprüche,
**dadurch gekennzeichnet,**
daß eine Kabelabfangvorrichtung (46) vorgesehen ist, welche drei Einführungsöffnungen (32) aufweist, in denen Druckelemente (43) angeordnet sind.

20. Kabelmuffe nach einem der Ansprüche 1 bis 18,
**dadurch gekennzeichnet,**
daß eine Kabelabfangvorrichtung (48) vorgesehen ist, welche vier Einführungsöffnungen (32) aufweist, in denen Druckelemente (43) angeordnet sind.

21. Kabelmuffe nach einem der Ansprüche 17 bis 20,
**dadurch gekennzeichnet,**
daß Kabelabfangvorrichtungen (31, 42, 46, 48) vorgesehen sind, welche Schenkel (33, 44, 47, 49) aufweisen, mit denen sie in einer Aufnahmekammer (10) der Unterschale (2) fixierbar sind.

22. Kabelmuffe nach einem der Ansprüche 7-9 und 12-21,
**dadurch gekennzeichnet,**
daß Lichtwellenleiter-Niederhalter (52) als U-förmige Winkel ausgebildet sind, deren erste Schenkel jeweils in den hinterschnittenen Nuten (11) durch Einschieben fixiert sind und deren zweite Schenkel als Rückhalter für Lichtwellenleiter-Überlängen nach unten so abgewinkelt sind, daß sie einen unteren Freiraum in der Unterschale 2 zur Aufnahme von Lichtwellenleiter-Überlängen bilden.

23. Kabelmuffe nach einem der vorhergehenden Ansprüche,
**dadurch gekennzeichnet,**
daß ein Kassettenhalter (72) im Freiraum innerhalb der Kabelmuffe vorzugsweise schwenkbar angeordnet ist, wobei er mit Steckfortsätzen (54) in den hinterschnittenen Nuten (11) der Unterschale (2) fixiert ist.

24. Kabelmuffe nach Anspruch 23,
**dadurch gekennzeichnet,**
daß der Kassettenhalter (72) aus einzelnen Fachplatten (53) besteht, zwischen denen die Lichtwellenleiter-Spleißkassetten einzeln entnehmbar eingelegt sind.

25. Kabelmuffe nach Anspruch 24,
**dadurch gekennzeichnet,**
daß die Fachplatten (53) Steckhülsen (55) aufweisen, mit denen die Fachplatten (53) steckbar aufeinander geschichtet werden können.

26. Kabelmuffe nach einem der vorhergehenden Ansprüche,
**dadurch gekennzeichnet,**
daß eine Abfangvorrichtung (56) für Zentralelemente von Lichtwellenleiter-Kabeln in einer Abfangkammer (10) der Unterschale (2) angeordnet ist.

27. Kabelmuffe nach Anspruch 26,
**dadurch gekennzeichnet,**
daß die Abfangvorrichtung (56) aus einem Grundbaustein (57) und einem darüber rastbaren U-förmig ausgebildeten Klemmteil (58) besteht, daß der Grundbaustein (57) und das Klemmteil (58) rastend miteinander verbunden sind, wobei der Grundbaustein (57) eine V-Nut (59) für die Aufnahme eines stabförmigen Zentralelements und eine kreisförmige Öffnung (62) mit einem Schlitz (63) für die Aufnahme eines Zentralrohres aufweist und daß die Klemmung der Zentralelemente mit Hilfe einer in die V-Nut (59) eindrehbaren Druckschraube erfolgt.

## Claims

1. Cable Splice box (1) comprising a lower shell (2) and a cover (3) for receiving electrical or optical splices, wherein at least one end face of the lower shell (2) comprises a fixed member (2a) and a removable sealing member (7), wherein cable inlet openings (4) are further arranged in the interface (8) between the fixed member (2a) and the sealing member (7), characterised in that the fixed member (2a) of the end face is formed from several rigid lamellae (9), which are arranged behind each other in the axial direction of the cable inlets and which extend transversely to the axial direction, the outermost and innermost lamellae (69) extending up as far as the top edge and forming a chamber (13) for receiving the sealing member (7), in that the sealing member (7) also has lamellae (23), which are directed towards the interface (8) and which correspond to the lamellae (9) of the lower shall (2a), in that the sealing member (7) can be fixed in the fixed member (20) of the end face in such a manner that, after sealing material has been placed in the interface (8) between the fixed member (2a) and the sealing member (7), a peripherally stepless sealing plane (68) is formed between the lower shell (2) and the cover (3), in that receiving chambers (10) are arranged inside the cable splice box (1), abutting the fixed member (2a) of the lower shell (2), to fix cable clamp devices (31, 42, 46, 48, 56), in that the cover (3) is connected in a hinged manner to the lower shell (2) by means of at least one hinge (5) along one side, and in that projections (17a, 17b) for the insertion of-closure elements (6) are arranged at the opposing sides of the cover (3) and the lower shell (2).

2. Cable splice box according to claim 1, Characterised in that the hinge (5) is formed from a plurality of individual projections.

3. Cable splice box according to either of the preceding claims, characterised in that the hinge (5) can be separated into corresponding hinge elements (5a, 5b) so that the cover (3) can be removed from the lower shell (2).

4. Cable splice box according to clam 3, characterised in that the corresponding hinge elements (5a, 5b) are guided inside each other in a lockable manner.

5. Cable splice box according to any one of the preceding claims, characterised in that a blind hole (16) is arranged in the cover (3) for bushings.

6. Cable splice box according to any one of the preceding claims, characterised in that the lateral walls (23) of the sealing member (7) extend towards each other in a wedge-shaped manner and in that the lateral walls of the chamber (13) are adapted to that wedge shape.

7. Cable splice box according to any one of the preceding claims, Characterised in that the lateral walls inside the lower shell are provided with ribs which preferably form undercut channels (11).

8. Cable splice box according to any one of the preceding claims, characterised in that the projections (17a, 17b) for receiving closure elements (6) are in the form of indentations in the lower shell (2) and in the cover (3).

9. Cable splice box according to any one of the preceding claims, characterised in that unused cable inlet openings (4) are closed using blind plugs (18).

10. Cable splice box according to claim 3, characterised in that the hinge element (5a) of the lower shell (2) has a slot (15) for receiving the shaft (5c) of the hinge element (5b) of the cover (3), the slot (15) being narrowed at its open end to a spacing (20) which is less than the diameter (21) of the shaft (5c) of the hinge element (5b) of the cover (3).

11. Cable splice box according to claim 10, characterised in that the shaft (5c) has a flattening (5d) which allows removal or introduction through the narrowed spacing (20) of the slot (15).

12. Cable splice box according to any one of the preceding claims, characterised in that the lamellae (9, 23) of the inlet openings (4) and the lamellae of the lateral walls (23) of the chamber (10) and of the sealing member (7) contain additional displacement channels (24) which receive sealing material.

13. Cable splice box according to any one of the preceding claims, characterised in that the sealing member (7) has in the inner region additional strips (27) for the fixing of fastening elements.

14. Cable splice box according to any one of the preceding claims, characterised in that the sealing member (7) has channels (67) for the engagement with angled members (7a) of the chambers (13) formed by the lamellae (69).

15. Cable splice box according to any one of the preceding claims, characterised in that the sealing member (7) has an integral packing gland (28) for receiving cables.

16. Cable splice box according to any one of the preceding claims, characterised in that d closure element (6) is provided and comprises a clamping element (29), which engages in a captive manner in the respective projection (17a) of the cover (3), and a fastening wire strap (30) which can be hooked into the respective projection (17b) of the lower shell (2).

17. Cable splice box according to any one of the preceding claims, characterised in that a cable clamp device (31) is provided and has an opening (34) for receiving and clamping a cable sheath tongue (40) by means of a compression element (36).

18. Cable splice box according to any one of claims 1 to 16, characterised in that a cable clamp device (42) is provided and has a movable compression element (43) for clamping onto the cable sheath.

19. Cable splice box according to any one of the preceding claims, characterised in that a cable clamp device (46) is provided and has three inlet openinqs (32), in which compression elements (43) are arranged.

20. Cable splice box according to any one of claims 1 to 18, characterised in that a cable clamp device (48) is provided and has four inlet openings (32), in which compression elements (43) are arranged.

21. Cable splice box according to any one of claims 17 to 20, characterised in that cable clamp devices (31, 42, 46, 48) are provided and have limbs (33, 11, 47, 49), by means of which they are fixable in a receiving chamber (10) of the lower shell (2).

22. Cable splice box according to any one of claims 7 to 9 and 12 to 21, characterised in that fibre-optic cable holders (52) are in the form of U-shaped angles whose first limbs are each push-fitted and retained in the undercut channels (11) and whose second limbs are angled downwardly as retaining elements for excess lengths of fibre-optic, cables in such a manner that they form a lower cavity in the lower shell (2) for receiving excess lengths of fibre-optic cables.

23. Cable splice box according to any one of the preceding claims, characterised in that a cassette holder (72) is arranged, preferably pivotably, in the cavity within the cable splice box, the cassette holder (72) being fixed in the undercut channels (11) of the- lower shell (2) by means of plug-in extensions (54).

24. Cable splice box according to claim 23, characterised in that the cassette holder (72) comprises individual compartment plates (53), between which the fibre-optic cable splice cassettes are inserted in an individually removable manner.

25. Cable splice box according to claim 24, characterised in that the compartment plates (53) have sockets (55), by means of which the compartmet plates (53) can be stacked on top of each other in a plug-in manner.

26. Cable splice box according to any one of the preceding claims, characterised in that a clamp device (56) for central elements of fibre-optic cables is arranged in a clamp chamber (10) of the lower shell (2).

27. Cable splice box according to claim 26, characterised in that the clamp device (56) comprises a base component (57) and a U-shaped clamping element (58), which engages thereover, in that the base component (57) and the clamping element (58) are connected to each other in an engaging manner, the base component (57) having a V-shaped channel (59) for receiving a rod-shaped central element and a circular opening (62) having a slot (63) for receiving a central tube, and in that the clamping of the central elements is offected by means of a pressure screw which can be screwed into the V-shaped channel (59).

## Revendications

1. Boîte de jonction (1) pour câbles, constituée par une coque inférieure (2) et un couvercle (3) servant à recevoir des jonctions épissées électriques ou optiques, dans lequel au moins une face frontale de la coque inférieure (2) et formée par une partie fixe (2a) et par un corps d'étanchéité amovible (7), et dans lequel en outre des ouvertures (4) d'introduction de câbles sont aménagées dans la surface de séparation (8) entre la partie fixe (2a) et le corps d'étanchéité (7),
caractérisée en ce
que la partie fixe (2a) de la face frontale est constituée par plusieurs lamelles rigides (9) qui sont disposées les unes derrière les autres dans la direction de l'axe des entrées pour câbles et s'étendent transversalement par rapport à la direction de l'axe, la lamelle la plus extérieure et la lamelle la plus intérieure (69) s'étendant vers le haut jusqu'au bord supérieur et formant une chambre (13) servant à loger le corps d'étanchéité (7), que le corps d'étanchéité (7) possède également des lamelles (23) qui sont tournées vers la surface de séparation (8) et qui correspondent aux lamelles (9) de la coque inférieure (2a), que le corps d'étanchéité (7) peut être fixé dans la partie fixe (2a) de la face frontale de telle sorte qu'après l'insertion d'un matériau d'étanchéité dans la surface de séparation (8) entre la partie fixe (2a) et le corps d'étanchéité (7), il s'établit un plan d'étanchéité continu circonférentiellement (68) entre la coque inférieure (2) et le couvercle (3), que des chambres de logement (10) pour la fixation de dispositifs (31, 42, 46, 48, 56) de saisie de câbles sont disposées à l'intérieur de la boîte de jonction (1) pour câbles, à la suite de la partie fixe (2a) de la coque inférieure (2) de manière à être contiguës, que le couvercle (3) est relié, de manière à être rabattable le long d'un côté, à la coque inférieure (2) par l'intermédiaire d'au moins une charnière (5) et que des parties conformées (17a, 17b) sont disposées sur les côtés opposés du couvercle (3) et de la coque inférieure (2) pour permettre l'insertion d'éléments de fermeture (6).

2. Boîte de jonction pour câbles selon la revendication 1, caractérisée en ce
que la charnière (5) est formée de plusieurs parties conformées individuelles.

3. Boîte de jonction pour câbles selon l'une des revendications précédentes, caractérisée en ce
que la charnière (5) peut être séparée en des éléments de charnière correspondants (5a, 5b) de sorte que le couvercle (3) peut être retiré de la coque inférieure (2).

4. Boîte de jonction pour câbles selon la revendication 3, caractérisée en ce
que les éléments de charnière correspondants (5a, 5b) sont imbriqués les uns dans les autres de manière à être encliquetables.

5. Boîte de jonction pour câbles selon l'une des revendications précédentes, caractérisée en ce
qu'un trou borgne (16) est formé dans le couvercle (3) pour des traversées.

6. Boîte de jonction pour câbles selon l'une des revendications précédentes, caractérisée en ce
que les parois latérales (23) du corps d'étanchéité (7) convergent avec une forme en coin et que les parois latérales de la chambre (13) sont adaptées à cette forme en coin.

7. Boîte de jonction pour câbles selon l'une des revendications précédentes, caractérisée en ce
que les parois latérales à l'intérieur de la coque inférieure sont pourvues de nervures, qui forment de préférence des nervures en contredépouille (11).

8. Boîte de jonction pour câbles selon l'une des revendications précédentes, caractérisée en ce
que les parties conformées (17a, 17b) sont agencées, pour recevoir des éléments de fermeture (6), sous la forme de renfoncements dans la coque inférieure (2) et dans le couvercle (3).

9. Boîte de jonction pour câbles selon l'une des revendications précédentes, caractérisée en ce
que des ouvertures non utilisées (4) d'introduction de câbles sont fermées par des bouchons (18).

10. Boîte de jonction pour câbles selon la revendication 3, caractérisée en ce
que l'élément de charnière (5a) de la coque inférieure (2) comporte une fente (15) servant à loger l'axe (5c) de l'élément de charnière (5b) du couvercle (3), la fente (15) étant rétrécie au niveau de son extrémité ouverte, à une dimension (20), qui est inférieure au diamètre (21) de l'axe (5c) de l'élément de charnière (5b) du couvercle (3).

11. Boîte de jonction pour câbles selon la revendication 10, caractérisée en ce
que l'axe (5c) comprend un méplat (5d) qui permet une sortie ou une introduction à travers la partie rétrécie (20) de la fente (15).

12. Boîte de jonction pour câbles selon l'une des revendications précédentes, caractérisée en ce
que les lamelles (9, 23) des ouvertures d'introduction (4) et les lamelles des parois latérales (23) de la chambre (10) et du corps d'étanchéité (7) contiennent des rainures supplémentaires de compression (24), qui logent un matériau d'étanchéité.

13. Boîte de jonction pour câbles selon l'une des revendications précédentes, caractérisée en ce
que le corps d'étanchéité (7) possède, dans sa partie intérieure, des barrettes supplémentaires (27) pour la fixation d'éléments de fixation.

14. Boîte de jonction pour câbles selon l'une des revendications précédentes, caractérisée en ce
que le corps d'étanchéité (7) comporte des rainures (67) prévues pour l'engagement de parties coudées (7a) de la chambre (13) formée par les lamelles (69).

15. Boîte de jonction pour câbles selon l'une des revendications précédentes, caractérisée en ce
que le corps d'étanchéité (7) possède un presse-étoupe conformé (28) pour recevoir des câbles.

16. Boîte de jonction pour câble selon l'une des revendications précédentes, caractérisée en ce
qu'il est prévu un élément de fermeture (6) qui est constitué par un élément de serrage (29), qui peut être encliqueté d'une manière imperdable dans la partie conformée respective (17a) du couvercle (3), et par un étrier en fil (30), qui peut être accroché dans la partie conformée respective (17b) de la coque inférieure (2).

17. Boîte de jonction pour câbles selon l'une des revendications précédentes, caractérisée en ce
qu'il est prévu un dispositif (31) de saisie de câble, qui comporte une ouverture (34) pour recevoir et serrer une patte (40) de la gaine de câbles au moyen d'un élément de serrage (36).

18. Boîte de jonction pour câbles selon l'une des revendications 1 à 16, caractérisée en ce
qu'il est prévu un dispositif (42) de saisie de câble, qui comporte un élément de serrage mobile (43) destiné à être serré sur la gaine du câble.

19. Boîte de jonction pour câbles selon l'une des revendications précédentes, caractérisée en ce
qu'il est prévu un dispositif (46) de saisie de câble, qui comporte trois ouvertures d'introduction (32), dans lesquelles sont disposées des éléments de serrage (43).

20. Boîte de jonction pour câbles selon l'une des revendications 1 à 18, caractérisée en ce
qu'il est prévu un dispositif (48) de saisie de câble, qui comporte quatre ouvertures d'introduction (32), dans lesquelles sont disposés des éléments de serrage (43).

21. Boîte de jonction pour câbles selon l'une des revendications 17 à 20, caractérisée en ce
que sont prévus des dispositifs (31, 42, 46, 48) de saisie de câbles, qui comportent des branches (33, 44, 47 et 49), au moyen desquelles ces dispositifs peuvent être fixés dans une chambre de logement (10) de la coque inférieure (2).

22. Boîte de jonction pour câbles selon l'une des revendications 7 à 9 et 12 à 21, caractérisée en ce
que des dispositifs (52) de retenue de guides d'ondes lumineuses sont agencés sous la forme de cornières en forme de U, dont les premières branches sont fixées respectivement par enfoncement dans les rainures en contredépouille (11) et dont les secondes branches sont coudées vers le bas en tant que dispositif de retenue pour des surlongueurs de guides d'ondes lumineuses, de sorte que les branches définissent un espace inférieur libre dans la coque inférieure (2) pour loger des surlongueurs de guides d'ondes lumineuses.

23. Boîte de jonction pour câbles selon l'une des revendications précédentes, caractérisée en ce
qu'un dispositif (72) de retenue de cassettes est disposé dans l'espace libre à l'intérieur de la boîte de jonction pour câbles, de préférence de manière à pouvoir pivoter, en étant fixé par des appendices saillantes d'enfichage (54) dans les rainures en contredépouille (11) de la coque inférieure (2).

24. Boîte de jonction pour câbles selon la revendication 23, caractérisée en ce
que le dispositif (72) de retenue de cassettes est constitué par des plaques individuelles, entre lesquelles les cassettes d'épissure de guides d'ondes lumineuses sont insérées de manière à pouvoir être retirées individuellement.

25. Boîte de jonction pour câbles selon la revendication 24, caractérisée en ce
que les plaques (53) possèdent des douilles d'enfichage (55) au moyens desquelles les plaques (53) peuvent être enfichées en étant superposées les unes aux autres.

26. Boîte de jonction pour câbles selon l'une des revendications précédentes, caractérisée en ce
qu'un dispositif de saisie (56) pour les éléments centraux de câbles à guides d'ondes lumineuses est disposé dans une chambre de saisie (10) de la coque inférieure (2).

27. Boîte de jonction pour câbles selon la revendication 26, caractérisée en ce
que le dispositif de saisie (56) est constitué par un module de base (57) et par une partie de serrage (58) qui est agencée en forme de U et peut être encliquetée au-dessus de ce module, que le module de base (57) et la partie de serrage (58) sont reliés entre eux par encliquetage, le module de base (57) comportant une rainure en V (59) servant à loger un élément central en forme de tige, et une ouverture de forme circulaire (62) comportant une fente (63) servant à loger un tube central, et que le serrage des éléments centraux s'effectue à l'aide d'une vis de serrage pouvant être vissée dans la rainure en V (59).
